# EUROPÄISCHE PATENTSCHRIFT

(11) **EP 0 891 403 B1**
(45) Veröffentlichungstag und Bekanntmachung des Hinweises auf die Patenterteilung: **31.10.2001**
(21) Anmeldenummer: 97914267.6
(22) Anmeldetag: 19.03.1997
(51) Int. Cl.: C09K 19/00, C09K 19/38, C08L 67/00, C08L 77/12, C09D 5/36

(54) **LCP-BLENDS**
LCP BLENDS
MELANGES DE POLYMERES CRISTALLINS LIQUIDES

(30) Priorität: 01.04.1996 DE 19612973
(43) Veröffentlichungstag der Anmeldung: 20.01.1999
(73) Patentinhaber: Clariant GmbH, 65929 Frankfurt am Main (DE)
(72) Erfinder: DIETZ, Erwin, D-61462 Königstein (DE); SCHÖNFELD, Axel, D-65207 Wiesbaden (DE)
(86) Internationale Anmeldenummer: EP9701367
(87) Internationale Veröffentlichungsnummer: WO9736969

(56) Entgegenhaltungen:
- EP-A- 0 154 953
- EP-A- 0 391 368
- EP-A- 0 608 991
- EP-A- 0 628 847
- DE-A- 4 416 993
- DE-A- 4 418 075
- GB-A- 2 282 145

## Beschreibung

Die Erfindung betrifft flüssigkristalline Mischungen (Blends) aus cholesterischen Polymeren mit nematischen und/oder cholesterischen Polymeren, Verfahren zu ihrer Herstellung sowie ihre Verwendung als polymere Werkstoffe und Effektpigmente.

Cholesterische Hauptkettenpolymere können analog nematischer Hauptkettenpolymere hergestellt werden, indem ein zusätzliches chirales Comonomer verwendet wird (US 4,412,059; EP 0 196 785 B1; EP 0 608 991 A1; EP 0 391 368 B1) oder indem nematische Haupkettenpolymere (LCP) mit zusätzlichen chiralen Comonomeren umgesetzt werden (EP 0 283 273 A2).

Cholesterische Hauptkettenpolymere zeichnen sich durch eine helikale Überstruktur aus. Diese führt zum einen dazu, daß das Material nicht mehr die bei nematischen Flüssigkristallpolymeren übliche Anisotropie der mechanischen Eigenschaften aufweist. Zum anderen zeigt das Material ausgeprägte Farbeffekte, die auf der selektiven Reflexion an der helikalen Überstruktur beruhen. Die genaue Reflexionsfarbe hängt hierbei vom Betrachtungswinkel und vor allem von der Ganghöhe der Helix ab. Für jeden beliebigen Betrachtungswinkel - zum Beispiel senkrechte Aufsicht auf einen Probekörper - erscheint als Reflexionsfarbe eine Farbe mit einer Wellenlänge, die der Ganghöhe der helikalen Überstruktur entspricht. Dies bedeutet, daß das reflektierte Licht eine umso kürzere Wellenlänge hat, je kürzer die Ganghöhe der Helix ist. Die sich ausbildende Ganghöhe der Helix hängt im wesentlichen von dem Anteil des chiralen Comonomers, der Art des Einbaus in das Polymer, des Polymerisationsgrads und der Struktur des chiralen Comonomers ("helical twisting power") ab. Außerdem zeigen viele Systeme noch eine mehr oder weniger ausgeprägte Temperaturabhängigkeit der Ganghöhe in der cholesterischen Phase und somit auch eine Variation der coloristischen Eigenschaften. So ist es möglich, allein durch die Variation des Anteils des chiralen Comonomers ein Polymer mit einem blauen oder einem grünen Farbeffekt herzustellen.

Von Nachteil bei diesen farbigen Polymeren ist aber, daß sich die Farbe nicht unmittelbar bei der Synthese identisch reproduzieren läßt. Zwar führt die Wiederholung der Synthese eines blauen Polymers in der Regel wieder zu einem blauen Polymer, jedoch unterscheiden sich diese doch sichtbar im Farbton, so daß sie in üblichen Farbprüfverfahren nicht als identische Farbe angesehen werden können, was ihrer Verwendung als Pigment im Wege steht.

In der DE-A-44 16 993 wird versucht, das Problem der genauen Farbeinstellung zu lösen, indem die Temperaturabhängigkeit eines cholesterischen Hauptkettenpolymers ausgenutzt wird. Die beschriebenen Polymere, die diese Temperaturabhängigkeit aufweisen, sind aber mit vielfältigen Nachteilen behaftet. So erscheint die genaue Farbeinstellung, die in der Regel erst auf der lackierten Oberfläche des Gebrauchsgegenstandes, zum Beispiel Auto erfolgt, durch eine exakte Temperaturführung als sehr schwierig und unter Autoserienlackierbedingungen überhaupt nicht durchführbar, da schon kleine Temperaturgradienten zu Farbtonänderungen führen.

Das in der DE-A-44 16 993 beschriebene Polymer basiert auf 4-(Hydroxyphenyl)- (1-[3-hydroxy-2-methyl]-propyl)-sulfid als chiraler Komponente, welches in einer aufwendigen Synthese hergestellt werden muß. Die Flüssigkristallpolymere sind in Lösemitteln löslich, so daß auch hier Quellungsprobleme mit einem Klarlack auftreten, was ebenfalls zu einer Veränderung der Ganghöhe und somit zu einer Änderung der Coloristik führt. Es handelt sich hierbei auch nicht um Pigmente, wie sie vom Fachmann üblicherweise verstanden werden, da sie in vielen Lösemitteln löslich sind. Die Verwendung Thioethergruppen enthaltender Polymere ist mit dem weiteren Nachteil verbunden, daß solche Thioether sehr leicht oxidiert werden und somit die Struktur der Flüssigkristalle zerstört wird. Eine solche Oxidation kann beispielsweise schon mit geringen Mengen an Ozon, wie sie in den Sommermonaten in der Umgebungsluft vorkommen, stattfinden (DE-A1-43 14 736). Auch ist der zusätzliche Vernetzungsschritt durch UV-Bestrahlung von Nachteil. Eine vollständige Vernetzung unter kontrollierten Bedingungen ist bei diesem System notwendig, da es ansonsten durch den UV-Anteil der Sonnenstrahlung unkontrolliert im Laufe der Zeit vernetzt. Ein weiterer Nachteil ist bei diesem System darin zu sehen, daß die "farbbestimmende Substanz des Lack-Körpers und die wesentliche Substanz des Lack-Körpers selber identisch sind" (DE 44 16 993 A1, Seite 8, Zeile 1-2). Dies bedeutet, daß man nicht, wie nach dem Stand der Technik zur Optimierung von Anwendungseigenschaften üblich, Pigmente und Bindemittel frei kombinieren kann.

In DE-A1-42 40 743 und US-A-4,410,570 sind Anwendungen von vernetzten cholesterischen Flüssigkristallen als Pigment beschrieben. Doch auch diese Systeme sind mit Nachteilen behaftet. Zum einen zeigen sie nicht die in üblichen Serienlackierbedingungen notwendige Temperaturstabilität und zum anderen quellen sie im Lack, was zu einer Farbänderung führt. Beim Einbrennen des Lackes ist dann wiederum ein Schrumpfen der Helix und eine damit verbundene weitere Farbänderung verknüpft, so daß eine genaue Farbeinstellung sehr schwierig ist. Außerdem zeigen die oben beschriebenen Systeme, bei denen die Farbe über eine Temperaturbehandlung oder ein spezielles Temperaturprogramm eingestellt wurde, nicht die gewünschte Reparaturfähigkeit.

Aufgabe der vorliegenden Erfindung ist es, die im Stand der Technik aufgeführten Nachteile zu vermeiden und ein Material zur Verfügung zu stellen, welches eine reproduzierbare Coloristik, die für Autoserienlackierungen notwendige Temperaturstabilität und eine hohe Chemikalienresistenz (Unlöslichkeit) aufweist.

Es wurde gefunden, daß sich die im Stand der Technik aufgeführten Nachteile überraschenderweise durch die Verwendung von Mischungen aus cholesterischen Polymeren mit nematischen und/oder cholesterischen Polymeren umgehen lassen und Materialen bereitgestellt werden können, die sich in ihren coloristischen Eigenschaften reproduzierbar herstellen lassen.

Gegenstand der vorliegenden Erfindung ist ein Verfahren zur Einstellung der Farbe von flüssigkristallinen Hauptketten-Polymeren, dadurch gekennzeichnet, daß man mindestens ein cholesterisches flüssigkristallines Hauptketten-Polymer mit einer Selektivreflexion im sichtbaren Wellenlängenbereich des Lichts und mindestens ein cholesterisches flüssigkristallines Hauptketten-Polymer mit einer Selektivreflexion im nichtsichtbaren Wellenlängenbereich des Lichts; oder mindestens zwei verschiedene cholesterische flüssigkristalline Hauptketten-Polymere, die jeweils eine Selektivreflexion im sichtbaren Wellenlängenbereich des Lichts aufweisen; oder mindestens zwei verschiedene cholesterische flüssigkristalline Hauptketten-Polymere enthält, die jeweils eine Selektivreflexion im nichtsichtbaren Wellenlängenbereich des Lichts, jedoch auf verschiedenen Seiten des sichtbaren Spektrums, aufweisen: oder mindestens ein nematisches flüssigkristallines Polymer und mindestens ein cholesterisches flüssigkristallines Hauptketten-Polymer in der Schmelze miteinander mischt und gegebenenfalls extrudiert, dadurch gekennzeichnet, daß das
cholesterische Hauptkettenpolymer
0 bis 99,9 Mol-% mindestens einer Verbindung aus der Gruppe der aromatischen Hydroxycarbonsäuren, cycloaliphatischen Hydroxycarbonsäuren und aromatischen Aminocarbonsäuren;
0 bis 49,95 Mol-% mindestens einer Verbindung aüs der Gruppe der aromatischen Dicarbonsäuren und cycloaliphatischen Dicarbonsäuren;
0 bis 49,95 Mol-% mindestens einer Verbindung aus der Gruppe der aromatischen Diole, cycloaliphatischen Diole und aromatischen Diamine;
0,1 bis 40 Mol-%, vorzugsweise 1 bis 25 Mol-%, an chiralen, bifunktionellen Comonomeren, und
0 bis 5 Mol-% einer verzweigbaren Komponente mit mehr als zwei funktionellen Gruppen enthält, wobei die Summe 100 Mol-% ergibt, und
das chirale bifunktionelle Comonomer mindestens eine Verbindung der Formeln 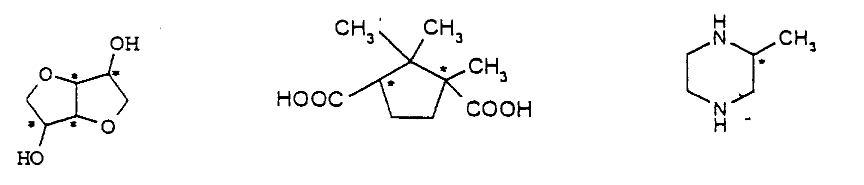 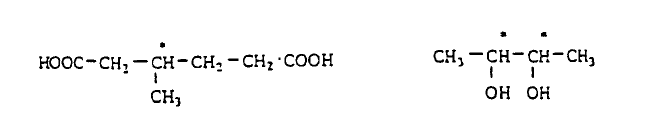 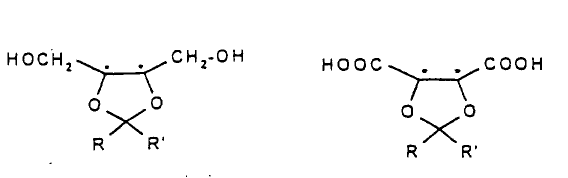 enthält,
wobei R und R' jeweils unabhängig voneinander H, C₁-C₆-Alkyl oder Phenyl, vorzugsweise H oder CH₃, ist.

Mischt man beispielsweise in der Schmelze ein cholesterisches Hauptkettenpolymer (cLCP), welches eine dunkelviolette Farbe aufweist, mit einem nematischen Hauptkettenpolymer (LCP), welches die für LCPs typische schwach beige Farbe (diese schwach beige Farbe der LCPs soll im folgenden unter "farblos" verstanden sein) aufweist, so kann man beobachten, daß die Mischung eine sehr brillante Coloristik zeigt. Je nach Mischungsverhältnis erhält man sehr brillante blaue, grüne oder auch goldgelbe Farben. Dies ist sehr überraschend, da dem Fachmann bekannt ist, daß das Mischen von Pigmenten in der Regel mit einem Verlust an Brillanz und einer Farbtonabtrübung verbunden ist.

Die Farbverschiebung bei der Mischung aus cLCP und LCP ist vermutlich darauf zurückzuführen, daß sich das LCP in den cLCP so einmischt, daß die Helix gezielt aufgeweitet wird. Ein solches Aufweiten der Helix ist mit einer Änderung der Wellenlänge des selektiv reflektierten Lichts verbunden, was sich in einer Farbänderung äußert. Überraschenderweise ermöglicht eine genaue Einstellung des Mischungsverhältnisses von cLCP und LCP es, jede beliebige Reflexionsfarbe gezielt und reproduzierbar einzustellen. Der aus einem bestimmten Mischungsverhältnis resultierende Farbton ist jedoch nicht vorhersehbar und muß durch einen entsprechenden Versuch ermittelt werden.

Die erfindungsgemäßen Mischungen sind jedoch nicht nur auf schwach beige LCPs und dunkelviolette cLCPs beschränkt. Folgende Möglichkeiten bestehen zur Herstellung von erfindungsgemäßen LCP-Blends mit ausgeprägter Selektivreflexion:
a) Mischungen aus farblosen LCP mit cLCPs, deren Helix-Ganghöhe stark verdrillt am kurzwelligen Ende (ca. 400 nm) des sichtbaren Spektrums oder sogar jenseits davon liegt:
   Solche cLCPs weisen in der Regel eine dunkelbräunliche bis dunkelviolette Farbe auf, die sehr schmutzig und wenig brillant wirkt. Das LCP beeinflußt in der Mischung mit dem cLCP die Helix des cLCP so, daß diese aus dem kurzwelligen Ende des sichtbaren Spektrums in das sichtbare Spektrum verschoben wird, was sich in brillanten Reflexionsfarben äußert. Die Reflexionsfarbe der Mischung verschiebt sich mit zunehmendem Anteil an LCP zu Farben größerer Wellenlängen, d. h. eine Mischung mit einem cLCP, welches selbst eine violette Coloristik aufweist, zeigt mit zunehmendem Anteil von LCP eine blaue, grüne und schließlich goldgelbe Coloristik.
b) Mischungen aus farblosen cLCPs mit cLCPs, wie sie unter a.) beschrieben sind:
   Unter farblosen cLCPs sollen solche cLCPs verstanden werden, die eine cholesterische Phase ausbilden, die jedoch dadurch gekennzeichnet ist, daß sie nur eine sehr schwache Verdrillung aufweist, d. h. daß die Ganghöhe der Helix größer ist als die langwellige Grenze des sichtbaren Lichtes. Ein solches Polymer zeigt den gleichen beigen Farbeindruck wie ein LCP. Die erwähnten Mischungen zeigen ebenfalls brillante Reflexionsfarben, die auf das gezielte Aufweiten der Helix des hochverdrillten cLCPs durch das Einmischen des schwach verdrillten cLCPs zurückzuführen sind.
c) Mischungen aus farblosen cLCPs oder LCPs mit farbigen cLCPs:
   Bei farbigen cLCPs, d. h. bei Polymeren die schon die cholesterischen Reflexionsfarben zeigen, kann die Coloristik durch das Einmischen von farblosen cLCPs oder LCPs gezielt verändert werden. Das nicht verdrillte LCP oder das schwach verdrillte cLCP können in der Mischung mit dem farbigen cLCP die Helix gezielt aufweiten und somit zu einer Änderung der Coloristik führen. Die Farbänderung ist allerdings auf längerwellige Farben begrenzt, da die Helix aufgeweitet wird. Dies bedeutet, daß es beispielsweise möglich ist, ein cLCP mit einer grünen Coloristik durch Einmischen von LCP oder farblosem cLPC zu einer goldgelben Coloristik zu verschieben. Es ist aber nicht möglich, ein cLCP mit grüner Coloristik durch Einmischen von LCP oder farblosem cLCP zu einer blauen Coloristik zu verschieben, da dies einer stärkeren Verdrillung der Helix entsprechen würde.
d) Mischungen aus mehreren farbigen cLCPs:
   Auch durch das Mischen mehrerer farbiger cLCPs ist es möglich, gezielt eine Helixganghöhe und die dazu korrespondierende Coloristik einzustellen. So kann beispielsweise die Helix eines blauen cLCPs durch Mischen mit einem goldgelben cLCP so aufgeweitet werden, daß man eine Mischung mit grüner Coloristik erhält.
e) Mischungen aus mehreren farbigen cLCPs mit unterschiedlichem Helix-Drehsinn:
   Eine Probe mit stark verdrillter Helix kann auch durch das Einmischen einer Probe mit ebenfalls stark verdrillter Helix, die aber einen entgegengesetzten Gang aufweist, in ihrer Helix aufgeweitet werden, was sich in längerwelligen Farben äußert. Proben mit Helices unterschiedlicher Gangrichtung erhält man einfach, indem man die entsprechenden Enantiomere verwendet. So kann man beispielsweise eine Probe mit (R)-(-)-2-Methylpiperazin als chiralem Comonomer und eine entsprechende Probe mit entgegengesetzter Ganghöhe mit (S)-(+)-2-Methylpiperazin als chiralem Comonomer herstellen.

Die oben beschriebenen Mischungen sind nicht auf jeweils zwei Mischungskomponenten beschränkt. Es ist auch möglich, Mischungen aus mehreren, z. B. 2 bis 10, zweckmäßig 2 bis 5 Komponenten herzustellen, die nicht alle aus einer der Kategorien a.) bis e.) kommen müssen. So ist es beispielsweise möglich, eine Mischung bestehend aus zwei verschiedenen LCPs, einem farblosen cLCP, mehreren farbigen cLCPs und einem sehr stark verdrillten cLCP herzustellen. In einer Mischung wird sich in der Regel eine aus den Ganghöhen der Einzelkomponenten gemittelte Ganghöhe ergeben. Es ist zweckmäßig, daß die einzelnen Mischungskomponenten so ausgewählt werden, daß die resultierende Coloristik in dem gewünschten Bereich liegt. Die Feineinstellung des Farbtons erfolgt dann über das Mischungsverhältnis der Komponenten.

Durch die erfindungsgemäßen LCP-Blends ist es aber auch möglich, mit nur zwei verschiedenen Mischungskomponenten das komplette Farbspektrum abzudecken. Es ist dann nicht erforderlich, für jeden Farbton eine andere Mischungskomponente zu suchen, sondern es genügt ein Polymer, das eine starke Verdrillung zeigt, welches dann mit einem nur schwach oder gar nicht verdrillten Polymer zu jeder gewünschten Coloristik abgemischt werden kann.

Die Mischungen ermöglichen es außerdem, Unterschiede in der Coloristik von verschiedenen Polymeransätzen auszugleichen. So kann man beispielsweise bei der Herstellung eines grünen Produkts coloristische Unterschiede, die sich aus nicht optimal reproduzierten Herstellbedingungen ergeben haben, durch entsprechendes Abmischen ausgleichen.

Bevorzugt im Sinne der vorliegenden Erfindung sind Polymerblends, enthaltend ein oder mehrere cholesterische flüssigkristalline Polymere mit einer Selektivreflexion im sichtbaren Wellenlängenbereich des Lichts und ein oder mehrere cholesterische flüssigkristalline Polymere mit einer Selektivreflexion im nichtsichtbaren Wellenlängenbereich des Lichts.

Bevorzugt im Sinne der vorliegenden Erfindung sind weiterhin Polymerblends, enthaltend mindestens zwei verschiedene cholesterische flüssigkristalline Polymere, die jeweils eine Selektivreflexion im sichtbaren Wellenlängenbereich des Lichts aufweisen.

Bevorzugt im Sinne der vorliegenden Erfindung sind weiterhin Polymerblends, enthaltend mindestens zwei verschiedene cholesterische flüssigkristalline Polymere, die jeweils eine Selektivreflexion im nichtsichtbaren Wellenlängenbereich des Lichts, jedoch auf verschiedenen Seiten des sichtbaren Spektrums, aufweisen.

Die Mischungsverhältnisse von LCP zu cLCP, oder cLCP zu cLCP in den erfindungsgemäßen flüssigkristallinen Polymerblends können beliebig sein und werden von dem jeweils angestrebten Farbton bestimmt. Die Verhältnisse reichen beispielsweise von 1 bis 99 Gew.-% zu 99 bis 1 Gew.-%, vorzugsweise 10 bis 90 Gew.-% zu 90 bis 10 Gew.-%, der jeweiligen Komponenten.

Als nematische Hauptgruppenpolymere (LCP) können alle dem Fachmann bekannten LCPs eingesetzt werden, wie sie in "G. W. Becker, D. Braun:
Kunststoff-Handbuch Band 3/3, Seite 219 - 258, Carl Hanser Verlag, München 1994" aufgeführt sind. Bevorzugte LCPs sind solche, die Monomere aus der Gruppe der aromatischen Hydroxycarbonsäuren, und/oder der aromatischen Dicarbonsäuren und aromatischen Diole enthalten.

Bei diesen Gruppen können aromatische Hydroxycarbonsäuren durch cycloaliphatische Hydroxycarbonsäuren oder aromatische Aminocarbonsäuren, aromatische Dicarbonsäuren durch cycloaliphatische Dicarbonsäuren, sowie aromatische Diole durch aromatische Diamine, Aminophenole und/oder cycloaliphatische Diole ersetzt werden.

Bei den stöchiometrischen Verhältnissen der genannten Monomere untereinander ist darauf zu achten, daß die dem Fachmann bekannte Stöchiometrie der funktionellen Gruppen zur Polykondensation unter Ausbildung von Ester- und/oder Amidbindungen gewährleistet ist.
Zusätzlich können die Polymere noch Komponenten mit mehr als zwei funktionellen Gruppen, wie beispielsweise Dihydroxybenzoesäuren, Trihydroxybenzole oder Trimellitsäure, enthalten. Diese Komponenten wirken als Verzweigungsstelle im Polymer und dürfen nur in geringen Konzentrationen beispielsweise O bis 5 Mol %, zugegeben werden, um eine Vernetzung des Materials zu vermeiden.

Besonders bevorzugt als LCPs sind nematische Hauptgruppenpolymere, die aus folgenden Bausteinen der einzelnen Monomergruppen aufgebaut sind:

Aromatische Hydroxycarbonsäuren, Aminocarbonsäuren:

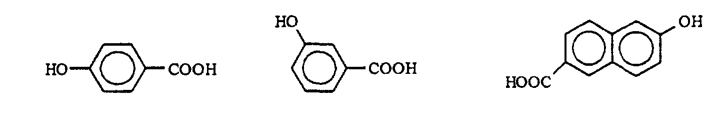

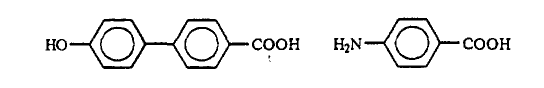

Aromatische Dicarbonsäuren, aliphatische Dicarbonsäuren:

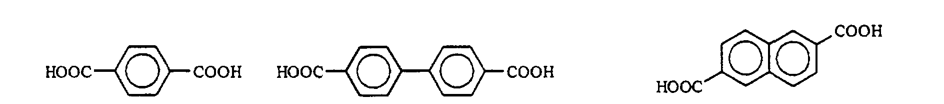

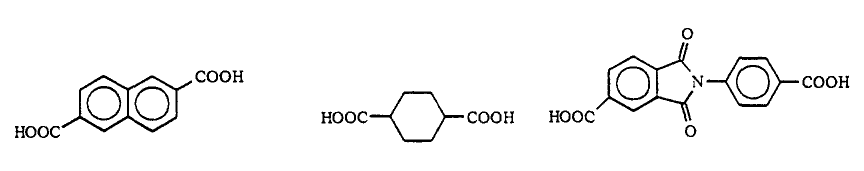

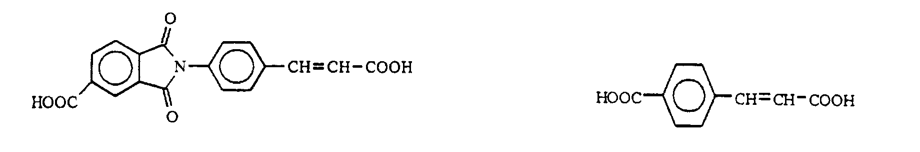

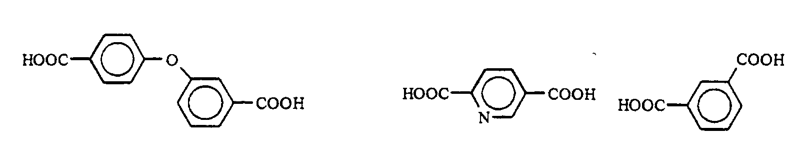

Aromatische Diole, Aminophenole, aromatische Diamine:

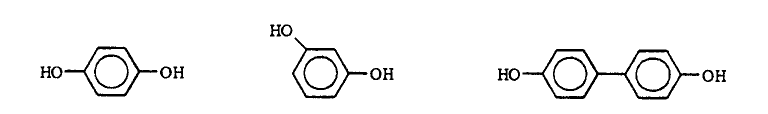

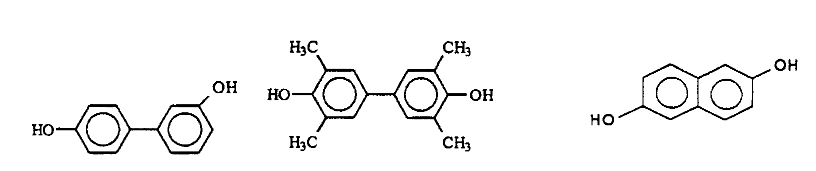

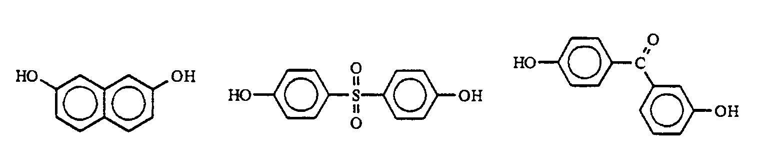

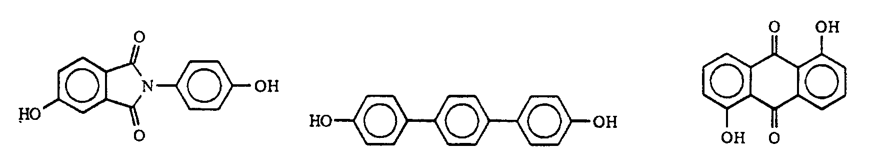

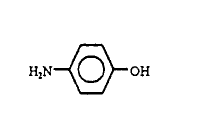

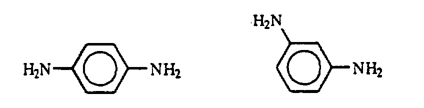

Ganz besonders bevorzugt als LCP sind Verbindungen, die als aromatische Hydroxycarbonsäure p-Hydroxybenzoesäure und/oder 2-Hydroxy-6-naphthoesäure, als aromatische Dicarbonsäure 2,6-Naphthalindicarbonsäure, Terephthalsäure und/oder Isophthalsäure und als aromatisches Diol Hydrochinon, Resorcin und/oder 4,4'-Dihydroxybiphenyl enthalten.

Gegenstand der vorliegenden Erfindung ist auch ein flüssigkristalliner Polymerblend, enthaltend mindestens zwei cholesterische flüssigkristalline Polymere, oder mindestens ein nematisches flüssigkristallines Polymer und mindestens ein cholesterisches flüssigkristallines Polymer, dadurch gekennzeichnet, daß das cholesterische flüssigkristalline Polymer ein Hauptkettenpolymer ist, das
0 bis 99,9 Mol-% mindestens einer Verbindung aus der Gruppe der aromatischen Hydroxycarbonsäuren, cycloaliphatischen Hydroxycarbonsäuren und aromatischen Aminocarbonsäuren;
0 bis 49,95 Mol-% mindestens einer Verbindung aus der Gruppe der aromatischen Dicarbonsäuren und cycloaliphatischen Dicarbonsäuren;
0 bis 49,95 Mol-% mindestens einer Verbindung aus der Gruppe der aromatischen Diole, cycloaliphatischen Diole und aromatischen Diamine;
0,1 bis 40 Mol-%, vorzugsweise 1 bis 25 Mol-%, an chiralen, bifunktionellen Comonomeren aus der Gruppe 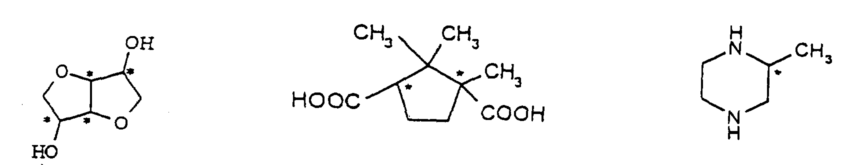 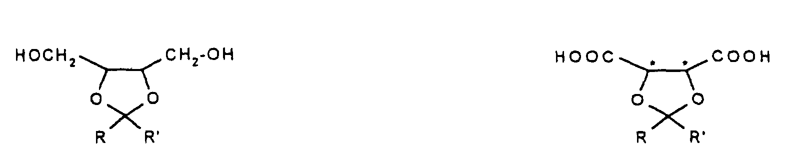 wobei R und R' jeweils unabhängig voneinander H, C₁-C₆-Alkyl oder Phenyl, vorzugsweise H oder CH₃, sind, und
0 bis 5 Mol-% einer verzweigbaren Komponente mit mehr als zwei funktionellen Gruppen enthält, wobei die Summe 100 Mol-% ergibt.

Bei den angegebenen Prozentsätzen ist darauf zu achten, daß die dem Fachmann bekannte Stöchiometrie der funktionellen Gruppen zur Polykondensation gewährleistet ist.
Zusätzlich können die Polymere noch Komponenten mit mehr als zwei funktionellen Gruppen, wie beispielsweise Dihydroxybenzoesäure,:
Trihydroxybenzol oder Trimellitsäure enthalten. Diese Komponenten wirken als Verzweigungsstelle im Polymer und dürfen nur in geringen Konzentrationen, beispielsweise 0 bis 5 Mol-% zugegeben werden, um eine Vernetzung des Materials zu vermeiden.

Besonders bevorzugt sind cholesterische Hauptgruppenpolymere, die aus folgenden Bausteinen der einzelnen Monomergruppen aufgebaut sind:
a) Aromatische Hydroxycarbonsäuren, Aminocarbonsäuren: 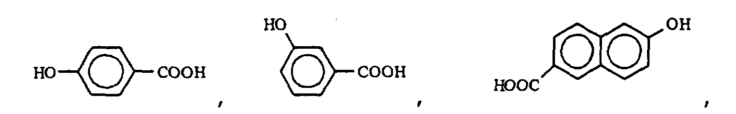 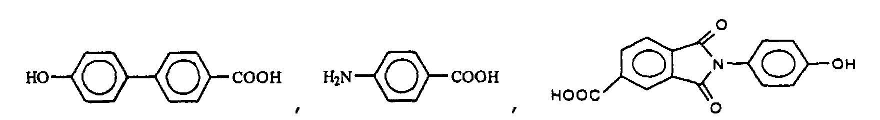
b) Aromatische Dicarbonsäuren, aliphatische Dicarbonsäuren: 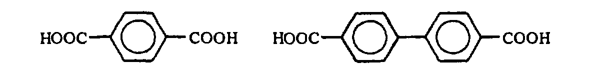 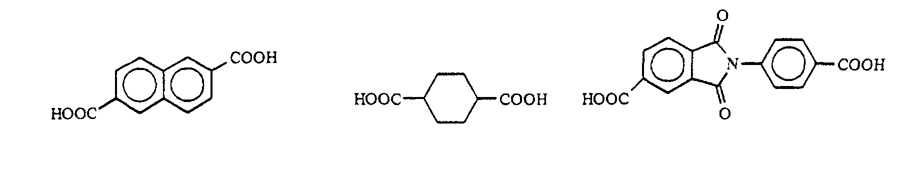 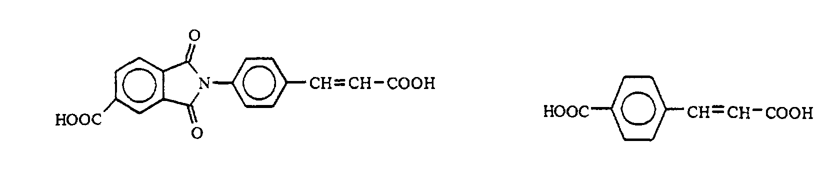 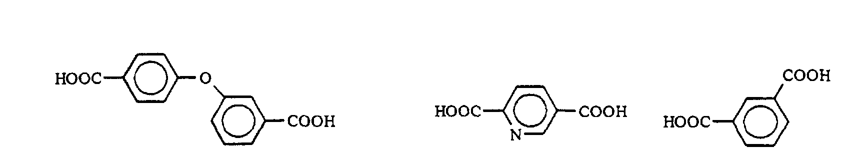
c) Aromatische Diole, Aminophenole, aromatische Diamine: 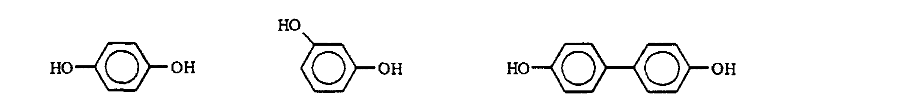 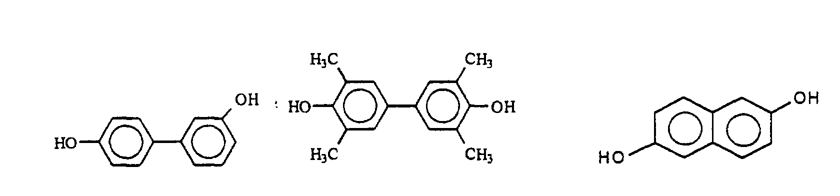 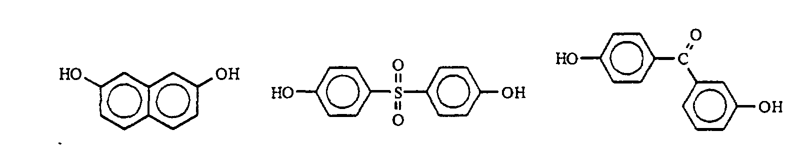 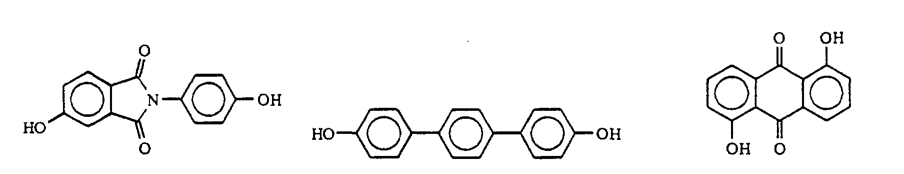 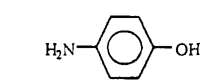 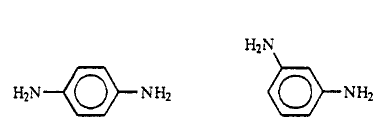
d) Chirale, bifunktionelle Monomere: 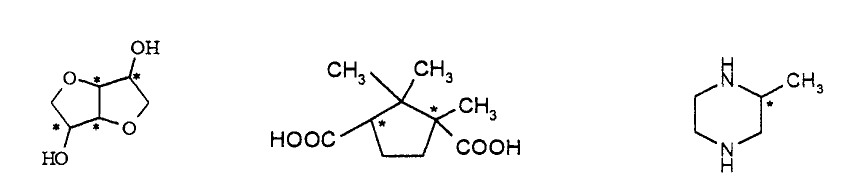 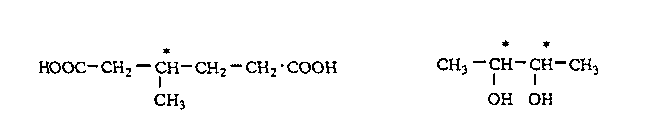 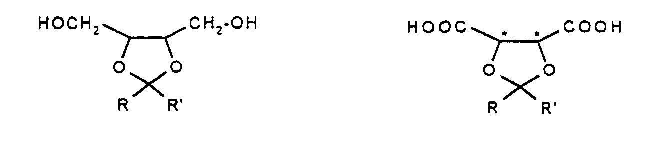 wobei R und R' jeweils unabhängig voneinander H, C₁-C₆-Alkyl oder Phenyl, vorzugsweise H oder CH₃, sind.

Insbesondere bevorzugt als cLCP sind Polymere, enthaltend Camphersäure oder/und Isosorbid als chirale Komponente sowie p-Hydroxybenzoesäure und/oder 2-Hydroxy-6-naphthoesäure und/oder Terephthalsäure und/oder Isophthalsäure und/oder Hydrochinon und/oder Resorcin und/oder 4,4'-Dihydroxybiphenyl und/oder 2,6-Naphthalindicarbonsäure.

Die chiralen Comonomere werden vorzugsweise in einer enantiomerenreinen Form eingesetzt. Bei Verwendung von Enantiomerengemischen eines Comonomers ist darauf zu achten, daß eine Enantiomerenform in einem wirksamen Überschuß vorhanden ist.

Die erfindungsgemäß eingesetzten Monomere können entweder direkt eingesetzt werden, oder es können auch zweckmäßige Vorstufen verwendet werden, die sich unter den nachfolgenden Reaktionsbedingungen zu den gewünschten Monomeren umsetzen. So kann beispielsweise statt N-(4-Hydroxyphenyl)trimellitimid Aminophenol und Trimellitsäureanhydrid eingesetzt werden.

Die Polykondensation kann über alle dem Fachmann bekannten Polykondensationsverfahren durchgeführt werden. Beispielsweise eignet sich die Schmelzkondensation mit Acetanhydrid, die in EP-A-0 391 368 beschrieben ist.

Bevorzugt erfolgt die Verknüpfung der Monomere über Esterbindungen (Polyester) und/oder über Amidbindungen (Polyesteramid/Polyamid), jedoch kann die Verknüpfung auch über andere dem Fachmann bekannte Verknüpfungsarten erfolgen, beispielsweise Polyesterimid.
Bei der Auswahl der Monomerbausteine ist darauf zu achten, daß die dem Fachmann bekannte Stöchiometrie der funktionellen Gruppen gewährleistet ist, d. h. daß funktionelle Gruppen, die miteinander in der Polykondensationsreaktion reagieren, in entsprechenden Verhältnissen eingesetzt werden. Beispielsweise bei Verwendung von Dicarbonsäuren und Diolen muß eine der Anzahl an Carboxylgruppen entsprechende Anzahl an Hydroxylgruppen vorhanden sein.

Anstelle der Carbonsäuren können auch Carbonsäurederivate, wie beispielsweise Säurechloride oder Carbonsäureester, eingesetzt werden. Anstelle der Hydroxykomponenten können auch entsprechende Hydroxyderivate, wie beispielsweise die acetylierten Hydroxyverbindungen, eingesetzt werden.

Die beschriebenen Polymerbausteine können noch weitere Substituenten wie beispielsweise Methyl, Methoxy oder Halogen, enthalten.

Die zu mischenden Polymere können auch vernetzbare Gruppen enthalten, so daß es möglich ist, die Mischung der Flüssigkristallpolymere durch beispielsweise eine Photovernetzung zu fixieren.

In einer bevorzugten Ausführungsform weisen sowohl die cLCPs als auch die LCPs eine sehr geringe Löslichkeit auf, so daß ihre Molekulargewichte nicht mit sonst üblichen Methoden (GPC, Lichtstreuung) bestimmt werden können. Als Maß für das Molekulargewicht kann die intrinsische Viskosität der Polymere in einer Lösung aus Pentafluorphenol/Hexafluorisopropanol herangezogen werden. Besonderes geeignet im Sinne der vorliegenden Erfindung sind Polymere mit einer intrinsischen Viskosität zwischen 0,1 dl/g und 10 dl/g. Die intrinsische Viskosität und somit das Molekulargewicht des cLCP und des LCP können sich unterscheiden, jedoch ist es von Vorteil, wenn beide in einer vergleichbaren Größenordnung liegen.

Das Mischen der cLCPs und LCPs kann in üblichen Vorrichtungen wie beispielsweise Kneter, Extruder, Misch- und Schmelzreaktoren, High-Shear-Mixer oder Walzenwerken in der Schmelze erfolgen. Die Verwendung eines Extruders ist hierbei bevorzugt, da durch eine Variation der Polymeranteile direkt die gewünschte Farbe eingestellt werden kann. So kann beispielsweise zu einer laufenden Extrusion von blauem cLCP so viel LCP zudosiert werden, bis die Mischung die gewünschte Farbe - beispielsweise eine grüne Farbe - aufweist. Der genaue Farbton kann direkt am Extruderstrang bestimmt werden. Die Polymere können jedoch auch als Pulver oder Pellets vorgemischt und anschließend extrudiert werden.

Die Mischung verhält sich wie ein neues Polymer, welches wie die Ausgangspolymere beispielsweise als Werkstoff weiterverarbeitet werden kann. Ein Werkstoff ist ein geformtes Gebilde wie beispielsweise Spritzgußartikel, extrudierte Profile oder Rohre, Bändchen, Folien oder Fasern. Insbesondere eignet sich der erhaltene Blend als Basismaterial zur Herstellung plättchenförmiger Effektpigmente, die sich insbesondere durch die Reproduzierbarkeit des Farbtons auszeichnen. Weiterhin eignen sich die erfindungsgemäßen Polymerblends als Ausgangsmaterial zur Herstellung von Effektbeschichtungen oder Pulvereffektbeschichtungen.

In den nachfolgenden Beispielen bedeuten Teile Gewichtsteile.

### Beispiel 1: Synthese eines LCP

28218 Teile 2-Hydroxy-6-naphthoesäure, 20718 Teile 4-Hydroxy-benzoesäure, 16614 Teile Terephthalsäure, 9310 Teile 4,4'-Dihydroxibiphenyl und 5505 Teile Resorcin werden in einem Reaktor mit 5268 Teilen Essigsäureanhydrid versetzt und mit einem leichten Stickstoffstrom durchspült. Die Mischung wird innerhalb von 15 Minuten auf 140 °C erhitzt und diese Temperatur dann für 20 Minuten gehalten. Danach wird die Temperatur innerhalb von 150 Minuten auf 320 °C erhöht. Ab ca. 220 °C beginnt Essigsäure abzudestillieren. Nach dem Erreichen der 320 °C wird die Mischung für 15 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird das Polymer mit Stickstoff belüftet, abgekühlt und isoliert. Das Polymer zeigt die für nematische Hauptkettenpolymere typische beige Farbe.

### Beispiel 2: Synthese eines cLCP

16931 Teile 2-Hydroxy-6-naphthoesäure, 20718 Teile 4-Hydroxy-benzoesäure, 7267 Teile Biphenyl-4,4'-dicarbonsäure und 4384 Teile 1,4:3,6-Dianhydro-D-sorbit (Isosorbid) werden in einem Reaktor mit 31457 Teilen Essigsäureanhydrid versetzt und mit einem leichten Stickstoffstrom durchspült. Die Mischung wird innerhalb von 15 Minuten auf 140 °C erhitzt und diese Temperatur dann für 30 Minuten gehalten. Danach wird die Temperatur innerhalb von 165 Minuten auf 335 °C erhöht. Ab ca. 220 °C beginnt Essigsäure abzudestillieren. Nach dem Erreichen der 335 °C wird die Mischung für 30 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird das Polymer mit Stickstoff belüftet, abgekühlt und isoliert.

Das Polymer hat eine dunkel-violette, schmutzig wirkende Farbe. Die Farbe tritt schon während der Kondensation im Vakuum auf und bleibt nur nach raschem Abkühlen erhalten, beim langsamen Abkühlen der Probe verschwindet die Farbe und man erhält ein grau-beiges Polymer, welches beim Erhitzen wieder die dunkel-violette Farbe annimmt.

### Beispiel 3: Synthese eines cLCP

22582 Teile 2-Hydroxy-6-naphthoesäure, 49723 Teile 4-Hydroxy-benzoesäure, 9968 Teile Terephthalsäure und 8714 Teile 1,4:3,6-Dianhydro-D-sorbit (Isosorbid) werden in einem Reaktor mit 63283 Teilen Essigsäureanhydrid versetzt und mit einem leichten Stickstoffstrom durchspült. Die Mischung wird innerhalb von 15 Minuten auf 140 °C erhitzt und diese Temperatur dann für 30 Minuten gehalten. Danach wird die Temperatur innerhalb von 165 Minuten auf 335 °C erhöht. Ab ca. 220 °C beginnt Essigsäure abzudestillieren. Nach dem Erreichen der 335 °C wird die Mischung für 30 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird mit Stickstoff belüftet und das Polymer mit einem Extruder ausgetragen und pelletiert.

Das Polymer hat eine dunkel-violette, schmutzig wirkende Farbe. Die Farbe tritt schon während der Kondensation im Vakuum auf.

### Beispiel 4: Synthese eines cLCP

45163 Teile 2-Hydroxy-6-naphthoesäure, 38121 Teile 4-Hydroxy-benzoesäure, 6977 Teile Terephthalsäure und 6138 Teile 1,4:3,6-Dianhydro-D-sorbit (Isosorbid) werden in einem Reaktor mit 63283 Teilen Essigsäureanhydrid versetzt und mit einem leichten Stickstoffstrom durchspült. Die Mischung wird innerhalb von 15 Minuten auf 140 °C erhitzt und diese Temperatur dann für 30 Minuten gehalten. Danach wird die Temperatur innerhalb von 165 Minuten auf 335 °C erhöht. Ab ca. 220 °C beginnt Essigsäure abzudestillieren. Nach dem Erreichen der 335 °C wird die Mischung für 30 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird mit Stickstoff belüftet und das Polymer mit einem Extruder ausgetragen und pelletiert.

Das Polymer hat eine beige, leicht schimmernde Farbe. Die Farbe tritt schon während der Kondensation im Vakuum auf und bleibt nach dem Abkühlen erhalten.

### Beispiel 5: Synthese eines cLCP

28218 Teile 2-Hydroxy-6-naphthoesäure, 34530 Teile 4-Hydroxy-benzoesäure, 8609 Teile Cyclohexan-1,4-dicarbonsäure, 2793 Teile 4,4'-Dihydroxibiphenyl und 5115 Teile 1,4:3,6-Dianhydro-D-sorbit (Isosorbid) werden in einem Reaktor mit 52580 Teilen Essigsäureanhydrid versetzt und mit einem leichten Stickstoffstrom durchspült. Die Mischung wird innerhalb von 15 Minuten auf 140 °C erhitzt und diese Temperatur dann für 20 Minuten gehalten. Danach wird die Temperatur innerhalb von 150 Minuten auf 320 °C erhöht. Ab ca. 220 °C beginnt Essigsäure abzudestillieren. Nach dem Erreichen der 320 °C wird die Mischung für 60 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird das Polymer mit Stickstoff belüftet, abgekühlt und isoliert.

Das Polymer zeigt bei senkrechtem Anblick eine gold-grünliche, brillante Farbe. Die Farbe tritt schon während der Kondensation im Vakuum auf und bleibt auch nach dem Abkühlen erhalten.

### Beispiel 6: Synthese eines cLCP

4703 Teile 2-Hydroxy-6-naphthoesäure, 3453 Teile 4-Hydroxy-benzoesäure, 4153 Teile Terephthalsäure, 270 Teile p-Phenylendiamin, 1590 Teile Dimethylbenzidin und 2192 Teile 1,4:3,6-Dianhydro-D-sorbit (Isosorbid) werden in einem Reaktor mit 10460 Teilen Essigsäureanhydrid versetzt und mit einem leichten Stickstoffstrom durchspült. Die Mischung wird innerhalb von 15 Minuten auf 140 °C erhitzt und diese Temperatur dann für 20 Minuten gehalten. Danach wird die Temperatur innerhalb von 150 Minuten auf 325 °C erhöht. Ab ca. 220 °C beginnt Essigsäure abzudestillieren. Nach dem Erreichen der 325 °C wird die Mischung für 60 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird das Polymer mit Stickstoff belüftet, abgekühlt und isoliert.

Das Polymer hat eine violette Farbe. Die Farbe tritt schon während der Kondensation im Vakuum auf und bleibt auch nach dem Abkühlen erhalten.

### Beispiel 7: Synthese eines cLCP

11287 Teile 2-Hydroxy-6-naphthoesäure, 13812 Teile 4-Hydroxy-benzoesäure, 4323 Teile Naphthalin-2,6-dicarbonsäure, 1396 Teile 4,4'-Dihydroxybiphenyl und 1826 Teile 1,4:3,6-Dianhydro-D-sorbit (Isosorbid) werden in einem Reaktor mit 20971 Teilen Essigsäureanhydrid versetzt und mit einem leichten Stickstoffstrom durchspült. Die Mischung wird innerhalb von 15 Minuten auf 140 °C erhitzt und diese Temperatur dann für 20 Minuten gehalten. Danach wird die Temperatur innerhalb von 150 Minuten auf 330 °C erhöht. Ab ca. 220 °C beginnt Essigsäure abzudestillieren. Nach dem Erreichen der 330 °C wird die Mischung für 20 Minuten bei dieser Temperatur weitergerührt. Danach wird die Stickstoffspülung abgebrochen und Vakuum angelegt. Die Mischung wird für weitere 40 Minuten unter Vakuum (7 mbar) gerührt. Danach wird das Polymer mit Stickstoff belüftet, abgekühlt und isoliert.

Das Polymer hat eine sehr brillante, gelb-gold grünliche Farbe. Die Farbe tritt schon während der Kondensation im Vakuum auf und bleibt auch nach dem Abkühlen erhalten.

### Beispiel 8: Synthese eines cLCP

20317 Teile 2-Hydroxy-6-naphthoesäure, 39778 Teile 4-Hydroxy-benzoesäure, 18993 Teile 4,4'-Dihydroxybiphenyl und 20424 Teile (1R,3S)-(+)-Camphersäure werden in einem Reaktor mit 62914 Teilen Essigsäureanhydrid versetzt und mit einem leichten Stickstoffstrom durchspült. Die Mischung wird innerhalb von 15 Minuten auf 140 °C erhitzt und diese Temperatur dann für 30 Minuten gehalten. Danach wird die Temperatur innerhalb von 165 Minuten auf 335 °C erhöht. Ab ca. 220 °C beginnt Essigsäure abzudestillieren. Nach dem Erreichen der 335 °C wird die Mischung für 30 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird das Polymer mit Stickstoff belüftet, abgekühlt und isoliert.

Das Polymer hat eine rotgoldene, brillante Farbe. Die Farbe tritt schon während der Kondensation im Vakuum auf.

### Beispiel 9: Synthese eines cLCP

4703 Teile 2-Hydroxy-6-naphthoesäure, 3453 Teile 4-Hydroxy-benzoesäure, 4153 Teile Terephthalsäure, 216 Teile p-Phenylendiamin, 1272 Teile Dimethylbenzidin, 451 Teile Diaminophenylbenzimidazol und 2192 Teile 1,4:3,6-Dianhydro-D-sorbit (Isosorbid) werden in einem Reaktor mit 10460 Teilen Essigsäureanhydrid versetzt und mit einem leichten Stickstoffstrom durchspült. Die Mischung wird innerhalb von 15 Minuten auf 140 °C erhitzt und diese Temperatur dann für 20 Minuten gehalten. Danach wird die Temperatur innerhalb von 150 Minuten auf 320 °C erhöht. Ab ca. 220 °C beginnt Essigsäure abzudestillieren. Nach dem Erreichen der 320 °C wird die Mischung für 60 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird das Polymer mit Stickstoff belüftet, abgekühlt und isoliert.

Das Polymer hat eine grünlich blaue Farbe. Die Farbe tritt schon während der Kondensation im Vakuum auf und bleibt auch nach dem Abkühlen erhalten. Das Material ist sehr spröde.

### Beispiel 10: Synthese eines cLCP

1411 Teile 2-Hydroxy-6-naphthoesäure, 1727 Teile 4-Hydroxy-benzoesäure, 415 Teile Terephthalsäure und 250 Teile (R)-(-)-2-Methylpiperazin werden in einem Reaktor mit 2619 Teilen Essigsäureanhydrid versetzt und mit einem leichten Stickstoffstrom durchspült. Die Mischung wird innerhalb von 15 Minuten auf 140 °C erhitzt und diese Temperatur dann für 30 Minuten gehalten. Danach wird die Temperatur innerhalb von 165 Minuten auf 330 °C erhöht. Ab ca. 220 °C beginnt Essigsäure abzudestillieren. Nach dem Erreichen der 330 °C wird die Mischung für 30 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird das Polymer mit Stickstoff belüftet, abgekühlt und isoliert.

Das Polymer hat eine beige, leicht schimmernde Farbe. Die Farbe tritt schon während der Kondensation im Vakuum und bleibt auch nach dem Abkühlen erhalten.

### Beispiel 11: Mischung aus einem LCP mit einem cLCP

Die Polymere aus Beispiel 1 und 2 werden in einem Verhältnis LCP : cLCP = 1 : 2 in einem Kolben bei 330 °C aufgeschmolzen und für ca. 15 Minuten gerührt, um eine homogene Mischung zu erreichen.
Die Mischung zeigt eine brillante blaue Farbe.

### Beispiel 12: Mischung aus einem LCP mit einem cLCP

Die Polymere aus Beispiel 1 und 2 werden in einem Verhältnis LCP : cLCP = 1 : 1 in einem Kolben bei 330 °C aufgeschmolzen und für ca. 15 Minuten gerührt, um eine homogene Mischung zu erreichen.

Die Mischung zeigt eine brillante grüne Farbe.

### Beispiel 13: Mischung aus einem LCP mit einem cLCP

Die Polymere aus Beispiel 1 und 2 werden in einem Verhältnis LCP : cLCP = 2 : 1 in einem Kolben bei 330 °C aufgeschmolzen und für ca. 15 Minuten gerührt, um eine homogene Mischung zu erreichen.
Die Mischung zeigt eine brillante goldgelbe Farbe.

### Beispiel 14: Mischung aus einem cLCP mit einem cLCP

20 Teile des in Beispiel 3 hergestellten cLCP werden auf einer Schneidmühle auf eine Kornfeinheit <5mm gemahlen und mit 10 Teilen des in Beispiel 4 hergestellten cLCP, welches auf die gleiche Weise gemahlen wurde, gemischt. Anschließend wird die Mischung auf einem Einschneckenextruder bei Temperaturen zwischen 250 °C und 350 °C als Strang extrudiert, mit Luft abgekühlt und granuliert. Man erhält einen Blend, welcher unter senkrechtem Betrachtungswinkel eine brillante blaue Farbe und unter schrägem Betrachtungswinkel eine brillante rötlich blaue Farbe zeigt. Wird dieser Blend mit einem Spachtel auf ein vorgeheiztes, schwarz grundiertes Blech aufgetragen, so erhält man unter senkrechtem Betrachtungswinkel einen brillanten blauen Film, welcher unter schrägem Betrachtungswinkel eine brillante rötlich blaue Selektivreflexion zeigt.

### Beispiel 15: Mischung aus einem cLCP mit einem cLCP

Beispiel 14 wird mit einer Mischung aus 15 Teilen des in Beispiel 3 hergestellten cLCP und 15 Teilen des in Beispiel 4 hergestellten cLCP wiederholt. Es wird ein Blend erhalten, welcher unter senkrechtem Betrachtungswinkel eine brillante grünblaue Farbe und unter schrägem Betrachtungswinkel eine brillante rötlich blaue Farbe zeigt. Wird dieser Blend mit einem Spachtel auf ein vorgeheiztes, schwarz grundiertes Blech aufgetragen, so erhält man unter senkrechtem Betrachtungswinkel einen brillanten grünblauen Film, welcher unter schrägem Betrachtungswinkel eine brillante blaue Selektivreflexion zeigt.

### Beispiel 16: Mischung aus einem cLCP mit einem cLCP

Beispiel 14 wird mit einer Mischung aus 10 Teilen des in Beispiel 3 hergestellten cLCP und 20 Teilen des in Beispiel 4 hergestellten cLCP wiederholt. Es wird ein Blend erhalten, welcher unter senkrechtem Betrachtungswinkel eine brillante grüngoldene Farbe und unter schrägem Betrachtungswinkel eine brillante bläulich grüne Farbe zeigt. Wird dieser Blend mit einem Spachtel auf ein vorgeheiztes, schwarz grundiertes Blech aufgetragen, so erhält man unter senkrechtem Betrachtungswinkel einen brillanten grüngoldenen Film, welcher unter schrägem Betrachtungswinkel eine brillante bläulich grüne Selektivreflexion zeigt.

### Beispiel 17: Mischung aus einem cLCP/LCP-Blend mit einem cLCP

Die Mischung aus Beispiel 11 wird mit dem cLCP aus Beispiel 5 im Gewichtsverhältnis 1 : 2 in einem Kneter bei Temperaturen zwischen 300 °C und 350 °C für 10 Minuten geknetet. Es wird ein Blend erhalten, welcher unter senkrechtem Betrachtungswinkel eine brillante hellblau türkise Farbe und unter schrägem Betrachtungswinkel eine brillante tiefblaue Farbe zeigt. Wird dieser Blend mit einem Spachtel auf ein vorgeheiztes, schwarz grundiertes Blech aufgetragen, so erhält man unter senkrechtem Betrachtungswinkel einen brillanten hellblau türkisen Film, welcher unter schrägem Betrachtungswinkel eine brillante azurblaue Selektivreflexion zeigt.

### Beispiel 18: Mischung aus einem cLCP mit einem cLCP

Das cLCP aus Beispiel 6 wird mit dem cLCP aus Beispiel 7 im Gewichtsverhältnis 1 : 2 in einem Kneter bei Temperaturen zwischen 300 °C und 350 °C für 10 Minuten geknetet. Es wird ein Blend erhalten, welcher unter senkrechtem Betrachtungswinkel eine brillante türkise Farbe und unter schrägem Betrachtungswinkel eine brillante azurblaue Farbe zeigt. Wird dieser Blend mit einem Spachtel auf ein vorgeheiztes, schwarz grundiertes Blech aufgetragen, so erhält man unter senkrechtem Betrachtungswinkel einen brillanten türkisen Film, welcher unter schrägem Betrachtungswinkel eine brillante azurblaue Selektivreflexion zeigt.

### Beispiel 19: Mischung aus einem cLCP mit einem cLCP

Das cLCP aus Beispiel 8 wird mit dem cLCP aus Beispiel 9 im Gewichtsverhältnis 1 : 1 in einem Zweischneckenextruder bei Temperaturen zwischen 250 °C und 350 °C extrudiert. Es wird ein Blend erhalten, welcher unter senkrechtem Betrachtungswinkel eine brillante gelblich grüne Farbe und unter schrägem Betrachtungswinkel eine brillante grünblaue Farbe zeigt. Wird dieser Blend mit einem Spachtel auf ein vorgeheiztes, schwarz grundiertes Blech aufgetragen, so erhält man unter senkrechtem Betrachtungswinkel einen brillanten gelblich grünen Film, welcher unter schrägem Betrachtungswinkel eine brillante grünblaue Selektivreflexion zeigt.

### Beispiel 20: Mischung aus einem cLCP mit einem cLCP

Das cLCP aus Beispiel 9 wird mit dem cLCP aus Beispiel 10 im Gewichtsverhältnis 3 : 2 in einem Zweischneckenextruder bei Temperaturen zwischen 285 °C und 350 °C extrudiert. Es wird ein Blend erhalten, welcher unter senkrechtem Betrachtungswinkel eine brillante gelbgrüne Farbe und unter schrägem Betrachtungswinkel eine brillante grünlich türkise Farbe zeigt. Wird dieser Blend mit einem Spachtel auf ein vorgeheiztes, schwarz grundiertes Blech aufgetragen, so erhält man unter senkrechtem Betrachtungswinkel einen brillanten gelbgrünen Film, welcher unter schrägem Betrachtungswinkel eine brillante grünlich türkise Selektivreflexion zeigt.

## Patentansprüche

1. Verfahren zur Einstellung der Farbe von flüssigkristallinen Hauptketten - Polymeren, **dadurch gekennzeichnet, daß** man mindestens ein cholesterisches flüssigkristallines Hauptketten - Polymer mit einer Selektivreflexion im sichtbaren Wellenlängenbereich des Lichts und mindestens ein cholesterisches flüssigkristallines Hauptketten - Polymer mit einer Selektivreflexion im nichtsichtbaren Wellenlängenbereich des Lichts; oder mindestens zwei verschiedene cholesterische flüssigkristalline Hauptketten - Polymere, die jeweils eine Selektivreflexion im sichtbaren Wellenlängenbereich des Lichts aufweisen; oder mindestens zwei verschiedene cholesterische flüssigkristalline Hauptketten - Polyrnere enthält, die jeweils eine Selektivreflexion im nichtsichtbaren Wellenlängenbereich des Lichts, jedoch auf verschiedenen Seiten des sichtbaren Spektrums, aufweisen: oder mindestens ein nematisches flüssigkristallines Polymer und mindestens ein cholesterisches flüssigkristallines Hauptketten - Polymer in der Schmelze miteinander mischt und gegebenenfalls extrudiert, **dadurch gekennzeichnet, daß** das cholesterische Hauptkettenpolymer
0 bis 99,9 Mol-% mindestens einer Verbindung aus der Gruppe der aromatischen Hydroxycarbonsäuren, cycloaliphatischen Hydroxycarbonsäuren und aromatischen Aminocarbonsäuren;
0 bis 49,95 Mol-% mindestens einer Verbindung aus der Gruppe der aromatischen Dicarbonsäuren und cycloaliphatischen Dicarbonsäuren;
0 bis 49,95 Mol-% mindestens einer Verbindung aus der Gruppe der aromatischen Diole, cycloaliphatischen Diole und aromatischen Diamine;
0,1 bis 40 Mol-%, vorzugsweise 1 bis 25 Mol-%, an chiralen, bifunktionellen Comonomeren, und
0 bis 5 Mol-% einer verzweigbaren Komponente mit mehr als zwei funktionellen Gruppen enthält, wobei die Summe 100 Mol-% ergibt, und
das chirale bifunktionelle Comonomer mindestens eine Verbindung der Formeln 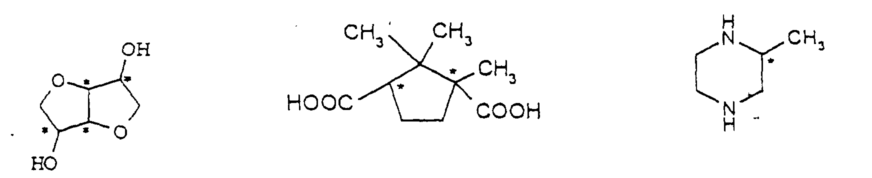 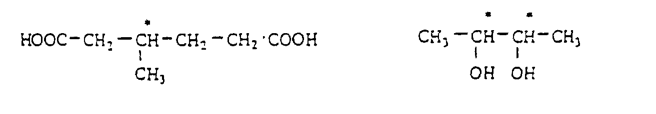 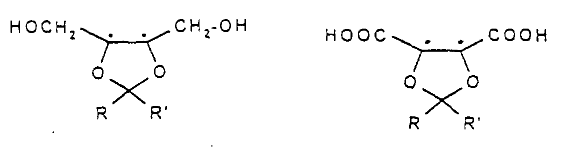 enthält,
wobei R und R' jeweils unabhängig voneinander H, C₁-C₆-Alkyl oder Phenyl, vorzugsweise H oder CH₃, ist.

2. Verfahren nach Anspruch 1, **dadurch gekennzeichnet, daß** das cholesterische Hauptkettenpolymer p-Hydroxybenzoesäure, 2-Hydroxy-6-naphthoesäure; Terephthalsäure, Isophthalsäure, 2,6-Naphthalindicarbonsäure, Hydrochinon, Resorcin, 4,4'-Dihydroxybiphenyl oder eine Kombination davon enthält.

3. Verfahren nach mindestens einem der Ansprüche 1 oder 2, **dadurch gekennzeichnet, daß** das nematische flüssigkristalline Polymer aromatische Hydroxycarbonsäuren, und/oder aromatische Dicarbonsäuren und aromatische Diole enthält.

4. Flüssigkristalliner Polymerblend, enthaltend mindestens zwei cholesterische flüssigkristalline Polymere, oder mindestens ein nematisches flüssigkristallines Polymer und mindestens ein cholesterisches flüssigkristallines Polymer, **dadurch gekennzeichnet, daß** das cholesterische flüssigkristalline Polymer ein Hauptkettenpolymer ist, das
0 bis 99,9 Mol-% mindestens einer Verbindung aus der Gruppe der aromatischen Hydroxycarbonsäuren, cycloaliphatischen Hydroxycarbonsäuren und aromatischen Aminocarbonsäuren;
0 bis 49,95 Mol-% mindestens einer Verbindung aus der Gruppe der aromatischen Dicarbonsäuren und cycloaliphatischen Dicarbonsäuren;
0 bis 49,95 Mol-% mindestens einer Verbindung aus der Gruppe der aromatischen Diole, cycloaliphatischen Diole und aromatischen Diamine;
0,1 bis 40 Mol-%, vorzugsweise 1 bis 25 Mol-%, an chiralen, bifunktionellen Comonomeren aus der Gruppe 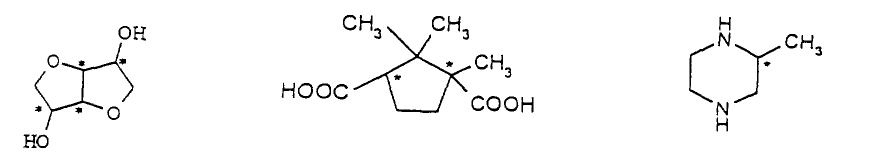 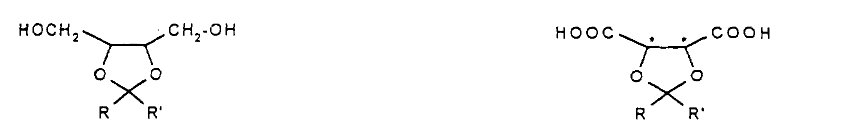 wobei R und R' jeweils unabhängig voneinander H, C₁-C₆-Alkyl oder Phenyl, vorzugsweise H oder CH₃, sind, und
0 bis 5 Mol-% einer verzweigbaren Komponente mit mehr als zwei funktionellen Gruppen enthält, wobei die Summe 100 Mol-% ergibt.

5. Polynaerblend nach Anspruch 4, **dadurch gekennzeichnet, daß** er p-Hydroxybenzoesäure, 2-Hydroxy-6-naphthoesäure; Terephthalsäure, Isophthalsäure, 2,6-Naphthalindicarbonsäure, Hydrochinon, Resorcin, 4,4'-Dihydroxybiphenyl oder eine Kombination davon enthält.

6. Polymerblend nach einem der Ansprüche 4 oder 5, **dadurch gekennzeichnet, daß** das nematische flüssigkristalline Polymer aromatische Hydroxycarbonsäuren, und/oder aromatische Dicarbonsäuren und aromatische Diole enthält.

7. Verwendung eines flüssigkristallinen Polymerblends nach einem oder mehreren der Ansprüche 4 bis 6 als Werkstoff.

8. Verwendung eines flüssigkristallinen Polymerblends nach einem oder mehreren der Ansprüche 4 bis 6 als Ausgangsmaterial zur Herstellung von Effektpigmenten.

9. Verwendung eines flüssigkristallinen Polymerblends nach einem oder mehreren der Ansprüche 4 bis 6 als Ausgangsmaterial zur Herstellung von Effektbeschichtungen oder Pulvereffektbeschichtungen.

## Claims

1. A process for adjusting the color of liquid-crystalline main-chain polymers, which comprises mixing at least one cholesteric liquid-crystalline main-chain polymer having selective reflection in the visible wavelength region of light and at least one cholesteric liquid-crystalline main-chain polymer having selective reflection in the invisible wavelength region of light;
or at least two different cholesteric liquid-crystalline main-chain polymers each of which has selective reflection in the visible wavelength region of light;
or at least two different cholesteric liquid-crystalline main-chain polymers each of which has selective reflection in the invisible wavelength region of light, but on different sides of the visible spectrum;
or at least one nematic liquid-crystalline polymer and at least one cholesteric liquid-crystalline main-chain polymer with one another in the melt, and, if desired, extruding the blend, wherein the cholesteric main-chain polymer comprises
from 0 to 99.9 mol% of at least one compound from the group consisting of aromatic hydroxycarboxylic acids, cycloaliphatic hydroxycarboxylic acids and aromatic aminocarboxylic acids;
from 0 to 49.95 mol% of at least one compound from the group consisting of aromatic dicarboxylic acids and cycloaliphatic dicarboxylic acids;
from 0 to 49.95 mol% of at least one compound from the group consisting of aromatic diols, cycloaliphatic diols and aromatic diamines;
from 0.1 to 40 mol%, preferably from 1 to 25 mol%, of chiral, bifunctional comonomers, and
from 0 to 5 mol% of a branchable component containing more than two functional groups,
where the sum is 100 mol%, and wherein the chiral bifunctional comonomer contains at least one compound of the formulae 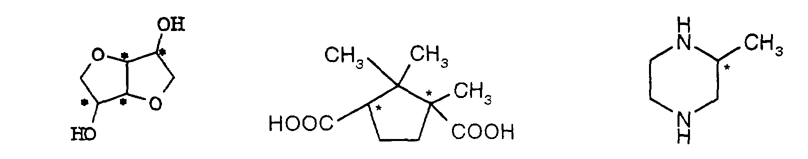 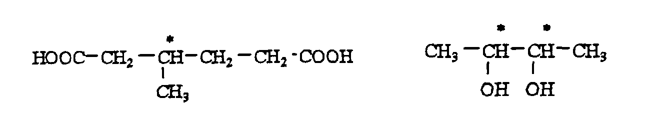 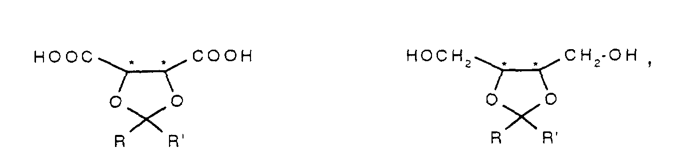 where R and R' are each, independently of one another, H, C₁-C₆-alkyl or phenyl, preferably H or CH₃.

2. The process as claimed in claim 1, wherein the cholesteric main-chain polymer comprises p-hydroxybenzoic acid, 2-hydroxy-6-naphthoic acid; terephthalic acid, isophthalic acid, 2,6-naphthalenedicarboxylic acid, hydroquinone, resorcinol, 4,4'-dihydroxybiphenyl, or a combination thereof.

3. The process as claimed in at least one of claims 1 or 2, wherein the nematic liquid-crystalline polymer comprises aromatic hydroxycarboxylic acids and/or aromatic dicarboxylic acids and aromatic diols.

4. A liquid-crystalline polymer blend comprising at least two cholesteric liquid-crystalline polymers or at least one nematic liquid-crystalline polymer and at least one cholesteric liquid-crystalline polymer, wherein the cholesteric liquid-crystalline polymer is a main-chain polymer which comprises
from 0 to 99.9 mol% of at least one compound from the group consisting of aromatic hydroxycarboxylic acids, cycloaliphatic hydroxycarboxylic acids and aromatic aminocarboxylic acids;
from 0 to 49.95 mol% of at least one compound from the group consisting of aromatic dicarboxylic acids and cycloaliphatic dicarboxylic acids;
from 0 to 49.95 mol% of at least one compound from the group consisting of aromatic diols, cycloaliphatic diols and aromatic diamines;
from 0.1 to 40 mol%, preferably from 1 to 25 mol%, of chiral, bifunctional comonomers from the group consisting of 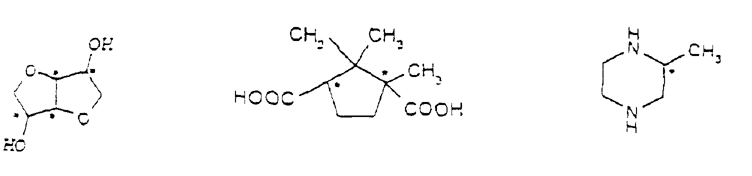 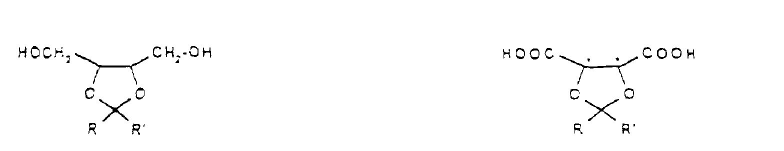 where R and R' are each, independently of one another, H, C₁-C₆-alkyl or phenyl, preferably H or CH₃, and
from 0 to 5 mol% of a branchable component containing more than two functional groups, where the sum is 100 mol%.

5. A polymer blend as claimed in claim 4, which comprises p-hydroxybenzoic acid, 2-hydroxy-6-naphthoic acid; terephthalic acid, isophthalic acid, 2,6-naphthalenedicarboxylic acid, hydroquinone, resorcinol, 4,4'-dihydroxybiphenyl, or a combination thereof.

6. A polymer blend as claimed in either of claims 4 or 5, wherein the nematic liquid-crystalline polymer comprises aromatic hydroxycarboxylic acids and/or aromatic dicarboxylic acids and aromatic diols.

7. The use of a liquid-crystalline polymer blend as claimed in one or more of claims 4 to 6 as a material.

8. The use of a liquid-crystalline polymer blend as claimed in one or more of claims 4 to 6 as a starting material for the preparation of effect pigments.

9. The use of a liquid-crystalline polymer blend as claimed in one or more of claims 4 to 6 as a starting material for the production of effect coatings or powder effect coatings.

## Revendications

1. Procédé de réglage de la couleur de polymères à chaînes principales cristaux liquides, **caractérisé en ce que** l'on mélange à l'état fondu et éventuellement on extrude au moins un polymère à chaîne principale cristal liquide cholestérique ayant une réflexion sélective dans le domaine de longueurs d'onde visible de la lumière et au moins un polymère à chaîne principale cristal liquide cholestérique ayant une réflexion sélective dans le domaine de longueurs d'onde non visible de la lumière; ou au moins deux polymères à chaînes principales cristaux liquides cholestériques différents présentant chacun une réflexion sélective dans le domaine des longueurs d'onde visible de la lumière; ou au moins deux polymères à chaînes principales cristaux liquides cholestériques différents présentant chacun une réflexion sélective dans un domaine de longueurs d'onde non visible de la lumière, mais sur les côtés opposés du spectre visible, ou au moins un polymère cristal liquide nématique et au moins un polymère à chaîne principale cristal liquide cholestérique, et
**caractérisé en ce que** le polymère à chaîne principale cholestérique contient
0 à 99,9 % en mol d'au moins un composé du groupe des acides hydroxycarboxyliques aromatiques, des acides hydroxycarboxyliques cycloaliphatiques et des acides aminocarboxyliques aromatiques;
0 à 49,95 % en mol d'au moins un composé du groupe des acides dicarboxyliques aromatiques et des acides dicarboxyliques cycloaliphatiques;
0 à 49,95 % en mol d'au moins un composé du groupe des diols aromatiques, des diols cycloaliphatiques ou des diamines aromatiques;
0,1 à 40 % en mol, de préférence 1 à 25 % en mol, de comonomères bifonctionnels chiraux, et
0 à 5 % en mol d'un constituant réticulable ayant plus de deux groupes fonctionnels, la somme étant égale à 100 % en mol, et le comonomère bifonctionnel étant au moins un composé de formule 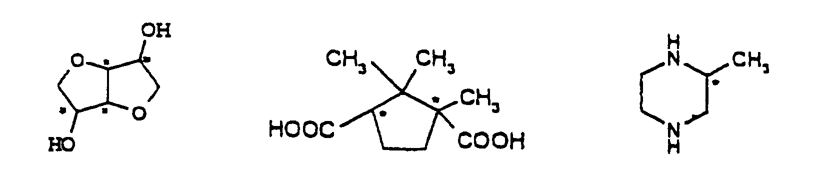 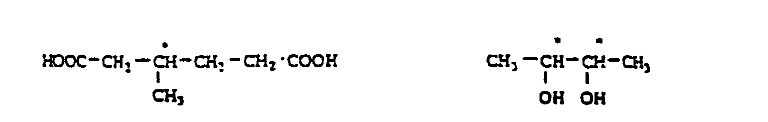 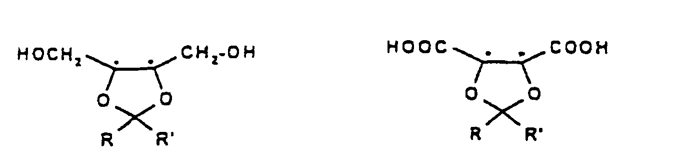 où R et R' représentent chacun, indépendamment l'un de l'autre, H ou un groupe alkyle en C₁-C₆ ou phényle, de préférence H ou CH₃.

2. Procédé selon la revendication 1, **caractérisé en ce que** le polymère à chaîne principale cristal liquide contient de l'acide p-hydroxybenzoïque, de l'acide 2-hydroxy-6-naphtoïque, de l'acide téréphtalique, de l'acide isophtalique, de l'acide 2,6-naphtalènedicarboxylique, de l'hydroquinone, du résorcinol, du 4,4'-dihydroxybiphényle ou une de leurs combinaisons.

3. Procédé selon l'une quelconque des revendications 1 ou 2, **caractérisé en ce que** le polymère cristal liquide nématique contient des acides hydroxycarboxyliques aromatiques et/ou des acides dicarboxyliques aromatiques et des diols aromatiques.

4. Mélange de polymères cristaux liquides, contenant au moins deux polymères cristaux liquides cholestériques, ou au moins un polymère cristal liquide nématique et au moins un polymère cristal liquide cholestérique, **caractérisé en ce que** le polymère cristal liquide cholestérique est un polymère à chaîne principale contenant
0 à 99,9 % en mol d'au moins un composé du groupe des acides hydroxycarboxyliques aromatiques, des acides hydroxycarboxyliques cycloaliphatiques et des acides aminocarboxyliques aromatiques;
0 à 49,95 % en mol d'au moins un composé du groupe des acides dicarboxyliques aromatiques et des acides dicarboxyliques cycloaliphatiques;
0 à 49,95 % en mol d'au moins un composé du groupe des diols aromatiques, des diols cycloaliphatiques ou des diamines aromatiques;
0,1 à 40 % en mol, de préférence 1 à 25 % en mol, de comonomères bifonctionnels chiraux du groupe constitué par 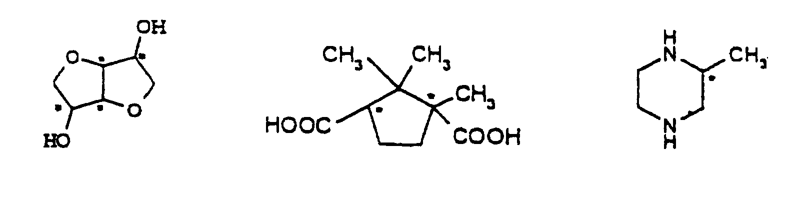 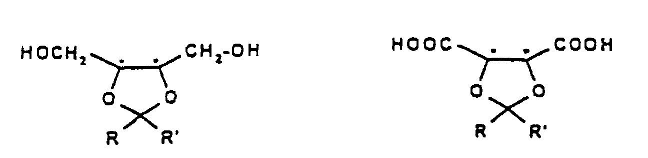 où R et R' représentent chacun, indépendamment l'un de l'autre, H ou un groupe alkyle en C₁-C₆ ou phényle, de préférence H ou CH₃, et
0 à 5 % en mol d'un constituant réticulable ayant plus de deux groupes fonctionnels, la somme étant égale à 100 % en mol.

5. Mélange de polymères selon la revendication 4, **caractérisé en ce qu'**il contient de l'acide p-hydroxybenzoïque, de l'acide 2-hydroxy-6-naphtoïque, de l'acide téréphtalique, de l'acide isophtalique, de l'acide 2,6-naphtalènedicarboxylique, de l'hydroquinone, du résorcinol, du 4,4'-dihydroxybiphényle ou une de leurs combinaisons.

6. Mélange de polymères selon l'une des revendications 4 ou 5, **caractérisé en ce que** le polymère cristal liquide nématique contient des acides hydroxycarboxyliques aromatiques et/ou des acides dicarboxyliques aromatiques et des diols aromatiques.

7. Utilisation d'un mélange de polymères cristaux liquides selon l'une ou plusieurs des revendications 4 à 6 comme matériau.

8. Utilisation d'un mélange de polymères cristaux liquides selon l'une ou plusieurs des revendications 4 à 6 comme produit de départ pour la préparation de pigments à effets.

9. Utilisation d'un mélange de polymères cristaux liquides selon l'une ou plusieurs des revendications 4 à 6 comme produit de départ pour la préparation de revêtements à effets ou de revêtement à effets en poudre.
